# EUROPÄISCHE PATENTSCHRIFT

(11) **EP 0 581 153 B1**
(45) Veröffentlichungstag und Bekanntmachung des Hinweises auf die Patenterteilung: **27.03.1996**
(21) Anmeldenummer: 93111499.5
(22) Anmeldetag: 17.07.1993
(51) Int. Cl.: B01D 29/44

(54) **Spaltfilter**
Edge filter
Filtre à arête

(30) Priorität: 22.07.1992 DE 9209856 U
(43) Veröffentlichungstag der Anmeldung: 02.02.1994
(73) Patentinhaber: FILTERWERK MANN & HUMMEL GMBH, D-71631 Ludwigsburg (DE)
(72) Erfinder: Gohle, Peter, D-7140 Ludwigsburg (DE)
(74) Vertreter: Voth, Gerhard, Dipl.-Ing.

(56) Entgegenhaltungen:
- DE-A- 2 600 897
- DE-U- 8 904 689
- US-A- 3 502 213

## Beschreibung

Die Erfindung betrifft ein Spaltfilter für Flüssigkeiten nach den Merkmalen des Oberbegriffs des Hauptanspruchs. Ein solches Spaltfilter geht aus dem DE-U-89 04 689 hervor. Dieses besteht aus einem hohlzylindrischen Filterkörper, der aus Drahtwicklungen besteht und von außen nach innen durchströmt ist. Am Umfang des Filterkörpers ist ein Schaber angeordnet, mit welchem der Filterkörper gereinigt werden kann. Der von dem Filterkörper gelöste Schmutz gelangt über ein Auslaßventil zu einer Schmutzabfuhrleitung. Zusätzlich zu dem Schaber ist noch eine Drahtbürste vorgesehen zum Entfernen des Schmutzes aus den Filterspalten.

Ein Nachteil dieses Aufbaus besteht darin, daß nur der oberflächlich anhaftende Schmutz an dem Filterkörper entfernt werden kann. Es hat sich im praktischen Betrieb gezeigt, daß Partikel, die annähernd die Größe der Filterspaltbreite aufweisen, in dem Filterspalt hängenbleiben und mittels des Abstreifers oder Bürste nicht entfernt werden können.

Es sind auch Rückspülfilter bekannt, bei denen durch erhöhten Flüssigkeitsdruck auf der Reinflüssigkeitsseite eine Rückspülung bewirkt wird. Die Rückspülwirkung wird jedoch nur bei sehr hohen Druckdifferenzen zwischen Rein- und Rohflüssigkeitsseite erzielt. Die Erzeugung einer solchen hohen Druckdifferenz ist nur mit erheblichem technischen Aufwand möglich.

Aus der US-A-35 02 213 ist ein Spaltfilter für die Reinigung von Flüssigkeiten bekannt, bei dem ein Spalt mittels eines gewickelten Profildrahtes erzeugt wird. Der Profildraht ist auf einen Stützkörper gewickelt der schlitzförmige Öffnungen aufweist. Ein Nachteil dieses Aufbaus liegt darin, daß eine Abreinigung bei dem Rückspülen des Filters erschwert ist. Insbesondere Schmutz der sich in den Schlitzen verhakt, läßt sich durch das Abreinigen mit Rückspülen nicht oder nur unter Aufwendung eines sehr hohen Rückspüldruckes aus den Schlitzen entfernen.

Es ist ferner aus der DE-B-26 00 897 ein Herstellverfahren für ein Filterelement bekannt. Bei diesem Herstellverfahren werden mittels eines Laserstrahls schlitzförmige Öffnungen in eine Rohr gebrannt. Auch diese schlitzförmige Öffnungen haben den Nachteil, daß sich Schmutz darin verhakt und das Abreinigen erschwert.

Der Erfindung liegt deshalb die Aufgabe zugrunde, ein Spaltfilter für Flüssigkeiten zu schaffen, bei dem eine zuverlässige Abreinigung des Filterkörpers durch einfache Maßnahmen erzielt wird.

Diese Aufgabe wird, ausgehend von dem Oberbegriff des Hauptanspruchs, durch dessen kennzeichnende Merkmale gelöst.

Ein Vorteil der Erfindung ist darin zu sehen, daß solche schlitzförmigen Öffnungen sehr einfach und wirtschaftlich herstellbar sind. Außerdem können diese schlitzförmigen Öffnungen konisch ausgebildet werden, d.h. die Schlitzfläche erweitert sich in Richtung des Reinflüssigkeitsraums. Damit wird der Gefahr des Verstopfens der Schlitze durch Schmutzpartikel wirksam begegnet und das Abreinigen durch die düsenartige Ausgestaltung der Schlitze wesentlich verbessert.

Der Vorteil der Erfindung gemäß einer Ausgestaltung besteht darin, daß der Filterkörper nunmehr mit Elementen versehen ist, die einerseits beim Filtrieren von Flüssigkeit eine bestimmte Spaltbreite aufweisen, andererseits durch einen Rückspüldruck dieser Spalt vergrößert werden kann und damit Schmutzpartikel, die sich an dem Spalt, also an den schlitzförmigen Öffnungen angelagert haben, entfernt werden. Der neuartige Filterkörper hat damit den Vorteil, daß sich eine mechanische Abreinigung der Oberfläche aufgrund des Rückspülens erübrigt, ferner durch den Rückspüldruck eine Vergrößerung der Öffnungen stattfindet.

Gemäß einer weiteren Ausgestaltung der Erfindung wird vorgeschlagen, den Filterkörper hohlzylindrisch auszubilden und radial von außen nach innen zu durchströmen. Das Stützelement ist selbstverständlich innen angeordnet. Die hohlzylindrische Struktur des Filterkörpers ist geeignet, auch größere Druckdifferenzen zwischen dem Schmutzflüssigkeitsraum und dem Reinflüssigkeitsraum aufnehmen zu können. Es hat sich als zweckmäßig erwiesen, bei einem hohlzylindrischen Filterkörper das Stützelement in Form eines Stützkorbs zu gestalten. Dieser Stützkorb liegt unmittelbar an dem Filterkörper an und verhindert ein Einklappen der Federzungen in den Reinflüssigkeitsraum.

Gemäß einer weiteren Ausgestaltung der Erfindung wird vorgeschlagen, die Breite der Federzunge so zu gestalten, daß die Länge der schlitzförmigen öffnung möglichst groß ist und die Feder gleichzeitig eine geringe Federkonstante aufweist. Dies wird dadurch erzielt, daß die Breite der Federzunge zur Zungenwurzel hin abnimmt.

Ein besonders vorteilhaftes Verfahren zur Herstellung des Filterkörpers beschreibt Anspruch 5. Nach diesem Verfahren werden die schlitzförmigen öffnungen mittels Laserstrahl aus dem Filterkörper herausgeschnitten. Selbstverständlich sind auch andere Herstellverfahren, wie z.B. das Ausstanzen oder das Ätzen der schlitzförmigen öffnungen denkbar.

In Anspruch 7 ist ein Verfahren zum Reinigen des erfindungsgemäßen Spaltfilters angeführt. Die Reinigung kann dadurch erfolgen, daß auf der Schmutzseite, d.h. in dem Schmutzflüssigkeitsraum der Druck abgesenkt wird, während auf der Reinseite der Druck konstant bleibt. Damit öffnen sich die Federzungen aus ihrer Normallage in Richtung Schmutzseite und vergrößern die schlitzförmigen öffnungen. Die von der Reinseite in den Schmutzflüssigkeitsraum gelangende Flüssigkeit spült die Schmutzpartikel aus den schlitzförmigen öffnungen. Gleichzeitig wird durch die Bewegung der Federzunge aus der Normallage ein Abplatzen eines eventuell an der Oberfläche des Filterkörpers anhaftenden Filterkuchens bewirkt.

Eine weitere Ausgestaltung der Erfindung bezüglich der Abreinigung des Spaltfilters hat den Vorteil, daß durch das öffnen des Schmutzablaßventils und das Schließen des Rohflüssigkeitszulaufventils eines Filters dieses automatisch rückgespült wird, d.h. durch die direkte Verbindung der Reinflüssigkeitsleitungen der Filter miteinander wird Reinflüssigkeit in das rückzuspülende Filter unter Betriebsdruck geförderet. Diese Reinflüssigkeit bewirkt einen Abtransport der angelagerten Schmutzpartikel an dem Filter über den Schmutzablauf.

Nach dem Rückspülen dieses Filters werden die Ventile umgeschaltet und das weitere Filter kann rückgespült werden. Normalerweise dauert das Rückspülen nur wenige Sekunden, so daß im wesentlichen beide Filter im Einsatz sind und damit auch eine hohe Filtrierleistung erzielt wird. Die Ventile der Filter können mittels einer Steuerschaltung angesteuert werden. Eine solche Steuerschaltung kann beispielsweise mit elektrischen Steuerelementen aufgebaut sein oder in der Gesamtsteuerung einer, die Filtereinrichtung beinhaltenden Maschine, vorgesehen sein. Zum Rückspülen eines der Filter bewirkt ein Steuersignal das Schalten der beiden für dieses Filter vorgesehenen Ventile. Die Reinigungszeit ist dabei frei einstellbar und richtet sich nach dem durchschnittlichen Schmutz bezw. Feststoffanfall.

Es besteht selbstverständlich auch die Möglichkeit, den Verschmutzungsgrad eines Filters über eine Differenzdruckmessung zwischen dem Druck auf der Rohflüssigkeitsseite und der Reinflüssigkeitsseite zu sensieren und in Abhängigkeit von diesem Differenzdruck die Ventile in die Rückspülstellung umzuschalten. In gleicher Weise kann auch die Dauer der Rückspülung über eine Differenzdruckmessung gesteuert werden, so daß ein vollautomatischer Betrieb der Filter unter gleichzeitiger Optimierung der Rückspülhäufigkeit und Rückspüldauer erzielt wird.

Gemäß einer weiteren Ausgestaltung der Erfindung wird vorgeschlagen, weitere Filter mit jeweils wenigstens einer Filterkammer vorzusehen. Auch diese Filter sind reinflüssigkeitsseitig mit dem ersten Filter verbunden und weisen in ihrem Rohflüssigkeitszulauf und ihrem Schmutzablauf ein Ventil auf. Es handelt sich damit bei diesen weiteren Filtern um die gleichen Komponenten, so daß mit einem einzigen Filterbaustein eine Filteranlage aufgebaut werden kann, die auf die Anforderungen, d.h. auf die anfallende Menge an die zu filterende Flüssigkeit optimal anpassbar ist. Selbst eine nachträgliche Erweiterung oder Reduzierung einer solchen Filteranlage ist ohne großen Aufwand möglich. Es ist lediglich ein weiterer Rohflüssigkeitszulauf und ein weiterer Reinflüssigkeitsablauf mit dem vorhandenen System zu koppeln bzw. zu entfernen.

Diese und weitere Merkmale von bevorzugten Weiterbildung der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindiung und auf anderen Gebieten verwirklicht sein und vorteilhaft deshalb schutzfähige Ausführungen darstellen können, für die hier Schutz beansprucht wird.

Die Erfindung wird nachfolgend anhand eines Ausführungsbeispiels näher erläutert. Es zeigt
- Figur 1: die Gestaltung eines Filterkörpers
- Figur 2: den Aufbau eines Spaltfilters mit dem in Figur 1 dargestellten Filterkörpers.
- Figur 3: die Prinzipskizze einer Filtereinrichtung mit mehreren Filtern
Spaltfilter eignen sich zum Filtern stark verschmutzter Flüssigkeiten aller Art. Sie werden verwendet zur Filtrierung von Schmieröl und Kraftstoff bei mittleren bis großen Verbrennungsmotoren, bei Dampf- und Wasserkraftmaschinen, Pumpen, Hydraulikanlagen, Werkzeugmaschinen und Getrieben. Bei der Reinigung von Wasser und Flüssigkeiten der chemischen Verfahrenstechnik sowie bei der Aufbereitung von Kühlschmierstoffen gelangen diese Filter ebenfalls zur Anwendung. Spaltfilter werden normalerweise im Hauptstrom verwendet, das heißt, die gesamte zu reinigende Flüssigkeit wird durch das Filter geführt. Die Filtereinsätze werden von außen nach innen durchströmt. Die Filterfeinheit wird durch die Spaltweiten bestimmt.

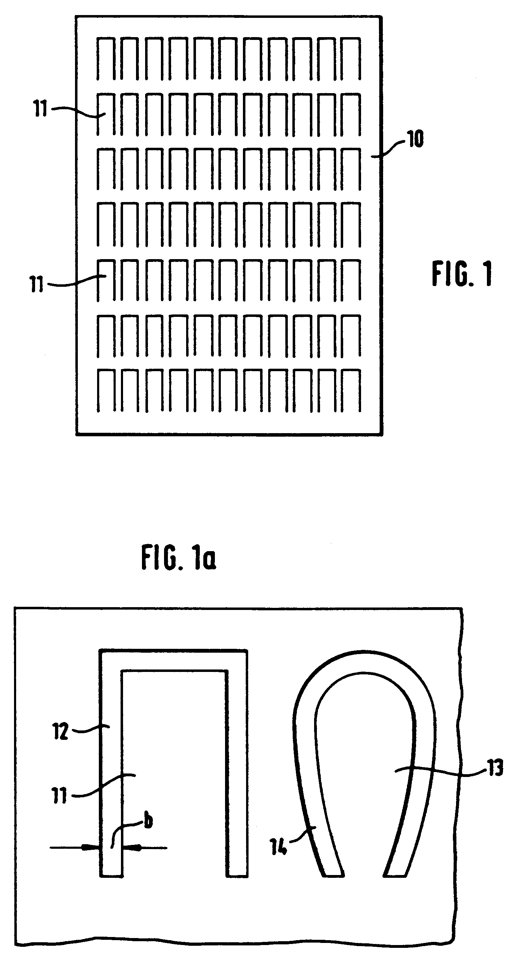

Ein Filterkörper besteht gemäß Figur 1 aus einer dünnen Metallplatte 10. Diese ist mit einer Vielzahl von Federzungen 11 ausgestattet, wobei an drei Seiten jeder Federzunge sich eine schlitzförmige öffnung befindet.

In Figur 1a ist eine vergrößerte Darstellung einer solchen Federzunge 11 gezeigt. Die Breite b der schlitzförmigen öffnung 12 bestimmt dabei die Filterfeinheit. Eine Variante einer Federzunge ist in Figur 1a ebenfalls gezeigt. Die Federzunge 13 ist derart gestaltet, daß deren Breite zur Zungenwurzel hin abnimmt. Die Federzunge 13 wird ebenfalls von einer öffnung 14 umgeben. Die Herstellung der schlitzförmigen öffnungen und damit der Federzunge erfolgt beispielsweise durch Ätzen oder durch Schneiden mittels Laserstrahl.

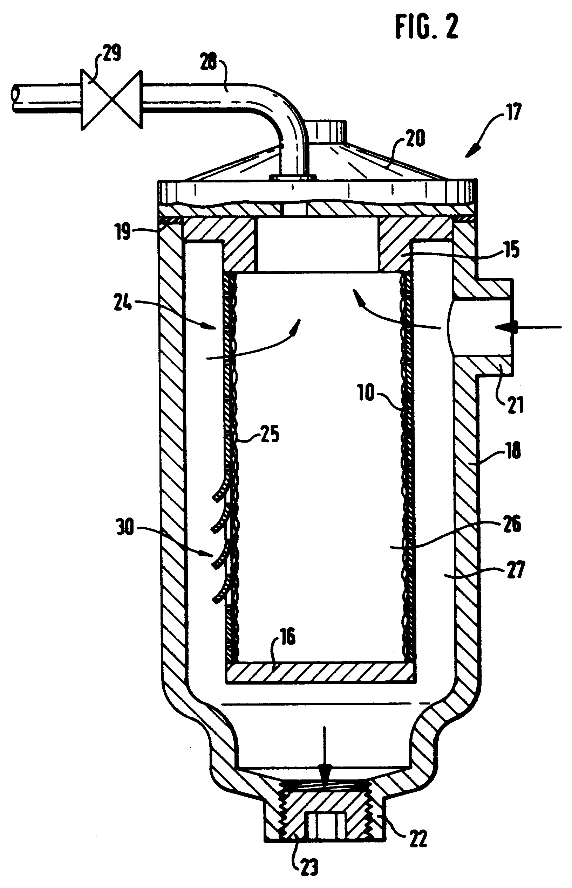

Ein Spaltfilter, das mit einer in Figur 1 gezeigten Metallplatte ausgestattet ist, zeigt Figur 2. Die Metallplatte 10 ist zylinderförmig gebogen und mit einem oberen und unteren Befestigungsring 15, 16 versehen. Das Spaltfilter 17 hat ein Filtergehäuse 18, das an seiner oberen Stirnseite über einen Dichtring 19 durch einen Gehäusedeckel 20 verschlossen ist.

In den Mantel des Filtergehäuses 18 mündet ein Einlaßkanal 21 für die Schmutzflüssigkeit, während aus dem Boden des Filtergehäuses 18 ein Auslaßkanal 22 für den abgesetzten Schmutz ausmündet, wobei dieser Auslaßkanal 22 mittels einer Schlammablaßschraube 23 verschlossen ist. Selbstverständlich besteht auch die Möglichkeit, an dem Auslaßkanal ein Ventil anzuordnen, das je nach Bedarf geschlossen oder geöffnet werden kann. Die Metallplatte 10 ist an der Innenseite mit einem Stützgewebe 25 versehen. Dieses Stützgewebe verhindert ein nach innen gerichtetes Einfedern der Federzungen. Der Filterkörper 24 wird im Filterbetrieb radial von außen nach innen durchströmt und trennt einen von ihm umschlossenen Reinflüssigkeitsraum 26 von einem ihn umgebenden Schmutzflüssigkeitsraum 27.

Der Filterkörper 24 ist mit der oberen Stirnseite über den Befestigungsring 15 an dem Gehäusedeckel 20 fixiert. Der Befestigungsring 16 am unteren Ende des Filterkörpers ist eine geschlossene Scheibe. Diese kann beispielsweise über nicht dargestellte Stehbolzen mit dem Befestigungsring 15 zur Erhöhung der Stabilität des Filterkörpers verbunden sein. Im Gehäusedeckel 20 befindet sich die Abfuhrleitung 28, durch welche die gereinigte Flüssigkeit abströmt. In dieser Abfuhrleitung 28 ist ein Ventil 29 angeordnet. Da der Flüssigkeitsdruck auf der Schmutzflüssigkeitsseite größer ist als der Flüssigkeitsdruck im Reinflüssigkeitsraum, verharren die Federzungen in der Ebene der Metallplatte bzw. werden durch das Stützgewebe in dieser Lage abgestützt. Zum Rückspülen des Filters wird auf der Reinflüssigkeitsseite ein höherer Druck angelegt und der Druck auf der Schmutzflüssigkeitsseite abgebaut. Durch diese Druckdifferenz bewegen sich die Federzungen, wie durch die Federzunge 30 dargestellt, nach außen. Dadurch wird die die jeweilige Federzunge umgebende schlitzförmige öffnung vergrößert und der darin anhaftende Schmutz nach außen weggespült. Dieser Schmutz sammelt sich im unteren Bereich des Spaltfilters und kann durch öffnen der Schlammablaßschraube 23 ausgetragen werden. Die auswärts gerichtete Bewegung der einzelnen Federzungen hat außerdem den Vorteil, daß ein Filterkuchen, der sich am Umfang des Filterkörpers aufgebaut hat, abplatzt und ebenfalls entfernt werden kann. Nach der Reduzierung des Drucks im Reinflüssigkeitsraum federn die einzelnen Zungen wieder in ihre Ausgangslage zurück.

Die Dimensionierung der Federzungen ist beliebig und richtet sich nach der Art des zu filtrierenden Mediums. In den Figuren sind diese Federzungen stark vergrößert wiedergegeben. Die Breite der schlitzförmigen öffnungen beträgt in der Praxis beispielsweise 10 bis 50 µm. Dementsprechend sind auch die Federzungen relativ schmal, um eine möglichst große Filterfläche zu erzielen.

Selbstverständlich besteht auch die Möglichkeit, anstelle von Federzungen einfache Schlitze als Filter vorzusehen. Diese Schlitze haben beispielsweise eine Breite von 8 µm auf der Anströmseite, d.h. auf der Seite des Rohflüssigkeitsraums und eine Breite von 20 µm auf der Abströmseite, d.h. auf der Seite des Reinflüssigskeitsraums. Solche Schlitze sind beispielsweise 400 µm lang. Sofern die Schlitze mittels Laserstrahl in den Filterkörper eingebrannt werden, besteht die Möglichkeit, je nach Fokusierung des Laserstrahls beliebige Formen und beliebigse Strukturen des Schlitzes sowohl senkrecht zur Filterkörperoberfläche als auch parallel zur Filterkörperoberfläche herzustellen. Damit kann die Filterstruktur optimal an das auszufilternde Medium angepaßt werden.

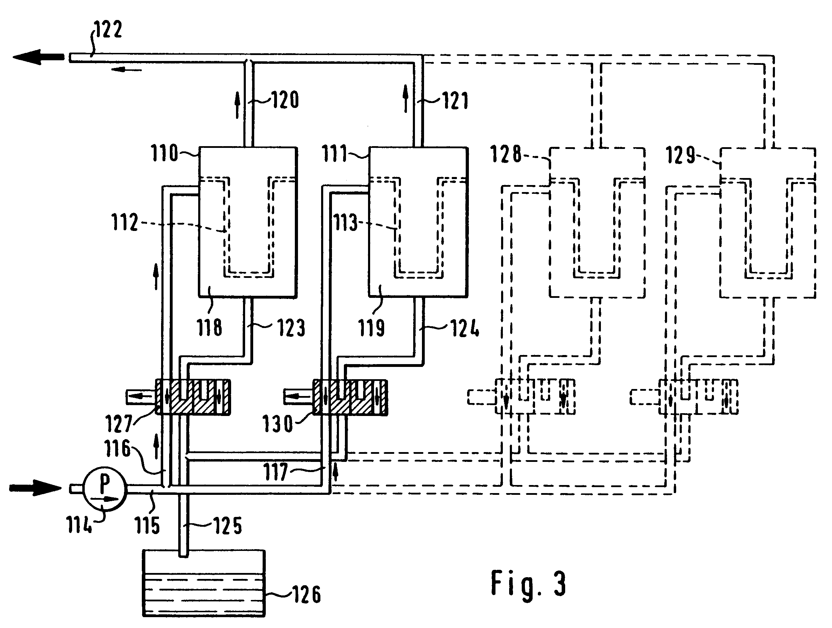

Die in Figur 3 gezeigte Filteranlage dient zur Reinigung von Erodierflüssigkeiten und besteht im wesentlichen aus Filtereinrichtungen 110, 111, die mit Filterkörpereinsätzen 112, 113 bestückt sind. Über eine Pumpe 114 wird Rohflüssigkeit von einer hier nicht dargestellten Maschine über die Leitungen 115, 116, 117 in den Rohflüssigkeitsraum 118, 119 der Filtereinrichtungen 110, 111 gefördert. Der Schmutz, d.h. in diesem Fall die mitgeschwemmten Teilchen, lagern sich an den äußeren Flächen der Filterkörper 112, 113 an. Die gereinigte Flüssigkeit verläßt über die Leitungen 120, 121 die Filtereinrichtungen.

Diese Leitungen münden in eine gemeinsame Leitung 122, über welche die gereinigte Flüssigkeit die Anlage verläßt. Am Boden der Filtereinrichtungen 110, 111 befindet sich jeweils ein Schmutzablaß. Der in der Filtereinrichtung sich ansammelnde Schmutz kann über die Leitungen 123, 124 einer gemeinsamen Schmutzsammelleitung 125 zugeführt werden, welche in ein Sammelbecken 126 mündet. Die Zuführleitungen für die Rohflüssigkeit 116 und 117 sowie die Leitungen für den Schmutzaustrag sind mit Ventilen 127, 130 verbunden. Diese Ventile sind zwei Zweiwegeventile, die elektrisch betätigt werden können.

In der in Figur 3 gezeigten Ventilstellung sind die Leitungen 116, 117 für die Rohflüssigkeitszufuhr durchgeschaltet. Die Leitungen 123, 124 für den Schmutzablauf sind unterbrochen. Wird von der Pumpe 114 Rohflüssigkeit gefördert, so wird diese in beide Filtereinrichtungen 110, 111 gefiltert und verläßt die Filtereinrichtungen für die Leitungen 20, 21.

In der Figur 3 sind zwei weitere Filtereinrichtungen 128, 129 in gestrichelter Form dargestellt. Diese können das gesamte Filtersystem erweitern, wobei sich diese Erweiterung nicht auf eine oder zwei Filtereinrichtungen beschränkt, sondern je nach Anwendungsfall eine beliebige Anzahl von Einrichtungen das System ergänzen können. Diese Filtereinrichtungen 128, 129 sind in dem Aufbau mit den Filtereinrichtungen 110 oder 111 identisch. Es handelt sich hier also um einzelne Filtermodule, die aneinander gekoppelt werden können, um die Filterkapazität zu erhöhen.

## Patentansprüche

1. Spaltfilter für Flüssigkeiten mit einem durchströmten Filterkörper (24), der innerhalb eines Filtergehäuses (18) einen Reinflüssigkeitsraum (26) umschließt und von einem Schmutzflüssigkeitsraum (27) abtrennt, mit einem den Filterkörper (24) auf der Seite des Reinflüssigkeitsraums (26) abstützenden Elements (25), dadurch gekennzeichnet, daß der Filterkörper (24) aus einer Platte (10) besteht, welche mit schlitzförmigen Öffnungen (12) versehen ist, welche jeweils eine Federzunge (11) umschließen.

2. Spaltfilter nach Anspruch 1, dadurch gekennzeichnet, daß der aus der Platte (10) bestehende Filterkörper (24) hohlzylindrisch geformt ist und radial von außen nach innen durchströmt ist.

3. Spaltfilter nach Anspruch 2, dadurch gekennzeichnet, daß das Stützelement ein Stützkorb (25) ist, an welchem der Filterkörper (24) unmittelbar anliegt.

4. Spaltfilter nach Anspruch 2 oder 3, dadurch gekennzeichnet, daß die Breite der Federzungen (11) zur Zungenwurzel hin abnimmt.

5. Herstellverfahren für einen Spaltfilter nach einem der vorherigen Ansprüche, dadurch gekennzeichnet, daß die schlitzförmigen Öffnungen (12) im Filterkörper (24) mittels Laserstrahl aus dem Filterkörper geschnitten werden.

6. Verfahren zum Reinigen eines Spaltfilters nach einem der Ansprüche 1 bis 3, dadurch gekennzeichnet, daß das Spaltfilter derart rückgespült wird, daß der Druck auf der Seite des Reinflüssigkeitsraums (26) höher als der Druck auf der Schmutzseite ist und die Federzunge (11) sich aus der Normallage in Richtung Schmutzflüssigkeitsraum (27) bewegt und somit die schlitzförmige Öffnung vergrößert wird.

7. Rückspülbares Spaltfilter für Flüssigkeiten nach Anspruch 1, dadurch gekennzeichnet, daß wenigstens eine Filterkammer vorgesehen ist, wobei das Filter einen Rohflüssigkeitszulauf und einen Reinflüssigkeitsablauf und ferner einen Schmutzablaß aufweist und wobei eine Pumpe im Rohflüssigkeitszulauf angeordnet ist und wenigstens ein Ventil in dem Rohflüssigkeitszulauf und ein weiteres Ventil in dem Schmutzablauf angeordnet ist, wobei ferner eine weitere Filtereinrichtung (111) mit einer Filterkammer vorgesehen ist, welche ebenfalls einen Rohflüssigkeitszulauf (117) und einen Reinflüssigkeitsablauf (121) und einen Schmutzablaß (124) aufweist sowie ein Ventil (130) in dem Rohflüssigkeitszulauf und ein weiteres Ventil (130) in dem Schmutzablauf angeordnet ist, wobei die Eingangsseiten der Ventile (127, 130) für den Rohflüssigkeitszulauf (116, 117) miteinander verbunden und an die Pumpe (114) angeschlossen sind, wobei der Reinflüssigkeitsablauf (121) des weiteren Filters direkt mit dem Reinflüssigkeitsablauf (120) des ersten Filters verbunden sind.

8. Rückspülbares Spaltfilter nach Anspruch 7, dadurch gekennzeichnet, daß eine Steuerschaltung zum Rückspülen der Filtereinrichtung vorgesehen ist, wobei die Steuerschaltung ein Schalterelement aufweist, welches zum Rückspülen einer Filtereinrichtung (111) das Ventil (130) in dem Rohflüssigkeitszulauf dieser Filtereinrichtung (111) verschließt und das Ventil (130) in dem Schmutzablaßzweig dieser Filtereinrichtung (111) öffnet, so daß ein Teil der Reinflüssigkeit über die rückspülende Filtereinrichtung geführt wird, dort den Schmutz aufnimmt und einem Schmutzaustrag (126) zuführt.

9. Rückspülbares Spaltfilter nach einem der vorhergehenden Ansprüche 7 oder 8, dadurch gekennzeichnet, daß weitere Filtereinrichtungen (128, 129) mit jeweils wenigstens einer Filterkammer vorgesehen sind, wobei diese Filtereinrichtungen ebenfalls in ihrem Rohflüssigkeitszulauf und in ihrem Schmutzablaß ein Ventil aufweisen und der Reinflüssigkeitsablauf diese Einrichtungen mit den Reinflüssigkeitsabläufen (121) der ersten und zweiten Einrichtung verbunden sind und wobei das Rückspülen einer oder mehrerer Filtereinrichtungen gleichzeitig durch die entsprechendene Ansteuerung der Ventile erfolgt.

## Claims

1. Slotted filter for fluids, including a traversed filter body (24), which surrounds a filtered fluid chamber (26) internally of a filter housing (18) and separates said chamber from an unfiltered fluid chamber (27), and an element (25), which supports the filter body (24) on the side of the filtered fluid chamber (26), characterised in that the filter body (24) comprises a plate (10), which is provided with slot-like apertures (12) which each surround a resilient projection member (11).

2. Slotted filter according to claim 1, characterised in that the filter body (24), which comprises the plate (10), has a hollow-cylindrical configuration and is traversed radially inwardly from the outside.

3. Slotted filter according to claim 2, characterised in that the supporting element is a supporting basket (25), against which the filter body (24) directly abuts.

4. Slotted filter according to claim 2 or 3, characterised in that the width of the resilient projection members (11) decreases towards the base thereof.

5. Method of manufacturing a slotted filter according to one of the preceding claims, characterised in that the the slot-like apertures (12) in the filter body (24) are cut from the filter body by means of a laser beam.

6. Method of cleaning a slotted filter according to one of claims 1 to 3, characterised in that the slotted filter is back-flushed in such a manner that the pressure on the side of the filtered fluid chamber (26) is higher than the pressure on the unfiltered side, and the resilient projection member (11) moves from the normal position in the direction towards the unfiltered fluid chamber (27) and, in consequence, the slot-like aperture is enlarged.

7. Back-flushable slotted filter for fluids according to claim 1, characterised in that at least one filter chamber is provided, wherein the filter has an unfiltered fluid inlet and a filtered fluid outlet as well as a dirt outlet, and wherein at least one pump is disposed in the unfiltered fluid inlet, and at least one valve is disposed in the unfiltered fluid inlet and an additional valve is disposed in the dirt outlet, wherein also an additional filtering means (111) is provided with a filter chamber and also has an unfiltered fluid inlet (117) and a filtered fluid outlet (121) as well as a dirt outlet (124), and a valve (130) is disposed in the unfiltered fluid inlet and an additional valve (130) is disposed in the dirt outlet, the inlet sides of the valves (127, 130) for the unfiltered fluid inlet (116, 117) being interconnected and communicating with the pump (114), and the filtered fluid outlet (121) of the additional filter being directly connected to the filtered fluid outlet (120) of the first filter.

8. Back-flushable slotted filter according to claim 7, characterised in that a control circuit is provided for the back-flushing of the filtering means, the control circuit having a switching element which, for the back-flushing of a filtering means (111), closes the valve (130) in the unfiltered fluid inlet of this filtering means (111) and opens the valve (130) in the dirt outlet branch of this filtering means (111) so that a portion of the filtered fluid is guided over the back-flushing filtering means, absorbs the dirt there and supplies it to a dirt outlet (126).

9. Back-flushable slotted filter according to one of the preceding claims 7 or 8, characterised in that additional filtering means (128, 129) are provided with at least one filter chamber each, said filtering means also having a valve in their unfiltered fluid inlet and in their dirt outlet, and the filtered fluid outlets of said filtering means are connected to the filtered fluid outlets (121) of the first and second means, the back-flushing of one or a plurality of filtering means being effected simultaneously by the appropriate actuation of the valves.

## Revendications

1. Filtre à fentes pour traitement de liquides comprenant un corps filtrant (24) enserrant à l'intérieur d'un boîtier (18) une chambre de liquide épuré (26) en la séparant d'une chambre de liquide à épurer (24), un élément (25) soutenant, du côté de la chambre (26) le corps filtrant (24), caractérisé en ce que le corps filtrant (24) a la forme d'une plaque (10) percée d'ouvertures (12) en forme de fentes dont chacune entoure une languette élastique (11).

2. Filtre à fentes selon la revendication 1, caractérisé en ce que le corps filtrant (24) est une plaque ayant la forme d'un cylindre creux qui est traversé radialement de l'extérieur vers l'intérieur.

3. Filtre à fentes selon la revendication 2, caractérisé en ce que l'élément de soutien est un panier (25) sur lequel s'appuie directement le corps filtrant (24).

4. Filtre à fentes selon la revendication 2 ou 3, caractérisé en ce que la largeur des languettes élastiques (11) va diminuant en direction de la base de la languette.

5. Procédé de fabrication d'un filtre à fentes selon une des revendications précédentes, caractérisé en ce que les ouvertures (12) en forme de fentes sont obtenues par découpage au rayon laser du corps filtrant.

6. Procédé de nettoyage d'un filtre à fentes selon une des revendications 1 à 3, caractérisé en ce que le filtre à fentes est balayé à contre-courant de manière que la pression du côté de la chambre à liquide épuré (26) soit supérieure à celle régnant du côté du liquide à épurer et que la languette élastique (11) se déplace, à partir de sa position normale, vers la chambre à liquide à épurer (27) en augmentant ainsi l'ouverture en forme de fente.

7. Filtre à fentes de liquide à lavage par contre-courant, selon la revendication 1, présentant les caractéristiques suivantes :
- il comporte au moins une chambre de filtration, le filtre étant équipé d'une amenée du liquide brut à épurer et d'une sortie de liquide épuré ainsi que d'une évacuation des impuretés,
- il est équipé, dans le circuit du liquide brut à épurer, d'une pompe et au moins d'une soupape, et également d'une soupape montée sur le circuit d'évacuation des impuretés,
- il est prévu en plus un autre dispositif de filtration (111) comprenant une chambre de filtration également équipée d'une amenée (117) de liquide brut à épurer, d'une sortie (121) de liquide épuré, d'une évacuation (124) des impuretés, d'une soupape (130) montée sur l'amenée (117) ainsi que d'une soupape (130) montée sur l'évacuation (124), les côtés entrée des soupapes (127, 130) des amenées (116, 117) du liquide brut étant reliés entre eux et raccordés à la pompe (114), la sortie (121) de liquide épuré appartenant au deuxième filtre étant reliée directement à la sortie (120) de liquide épuré appartenant au premier filtre.

8. Filtre à fentes à lavage à contre-courant, selon la revendication 1 présentant les caractéristiques suivantes :
- il est prévu de commander une commutation pour laver à contre-courant le dispositif de filtration, cette commutation étant assurée par un élément de commutation qui, pour laver un dispositif (111) de filtration, ferme la soupape (130) montée sur la sortie de liquide épuré de ce dispositif (111) et ouvre en même temps la dérivation d'évacuation des impuretés sortant de ce filtre (111), de sorte qu'une partie du liquide épuré traverse le filtre (111) à contre-courant pour y prendre en charge les impuretés et les emmener à un collecteur d'impuretés (126).

9. Filtre à fentes à lavage à contre-courant, selon une des revendications 7 ou 8, caractérisé en ce qu'il comporte d'autres dispositifs de filtration (128, 129) équipés chacun d'au moins une chambre de filtration, ces dispositifs possédant également une soupape sur leurs sorties de liquide brut et leurs évacuations d'impuretés, la sortie de liquide brut de ces dispositifs étant reliée aux sorties de liquides épurés (121) du premier et du deuxième dispositif, le lavage à contre-courant d'un ou de plusieurs dispositifs de filtration étant effectué simultanément par une commande appropriée des soupapes.
